(19) Europäisches Patentamt
European Patent Office
Office européen des brevets

(11) Veröffentlichungsnummer: **0 074 925**
**A1**

(12) **EUROPÄISCHE PATENTANMELDUNG**

(21) Anmeldenummer: 82810372.1

(22) Anmeldetag: 06.09.82

(51) Int. Cl.³: C 09 B 57/04
C 07 D 401/12, C 07 D 401/14
C 08 K 5/34

(30) Priorität: 11.09.81 CH 5898/81

(43) Veröffentlichungstag der Anmeldung: 23.03.83 Patentblatt 83/12

(84) Benannte Vertragsstaaten: CH DE FR GB IT LI



(71) Anmelder: CIBA-GEIGY AG
Patentabteilung Postfach
CH-4002 Basel(CH)

(72) Erfinder: Felix, Franz, Dr.
Dürrenmattweg 83
CH-4123 Allschwil(CH)

(72) Erfinder: Lienhard, Paul, Dr.
Kirschgartenstrasse 14
CH-4402 Frenkendorf(CH)


(54) **Nickelkomplexe von Azinen.**


(57) 1:1-Nickelkomplexe von Azinen der Formel I oder von dazu tautomeren Formen

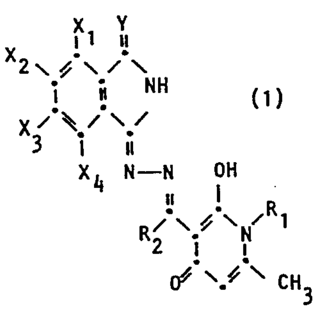

(1)

worin $X_1$ bis $X_4$ unabhängig voneinander Wasserstoff, Chlor oder Methoxy bedeuten, und $R_1$ Wasserstoff, $C_1$-$C_4$-Alkyl, unsubstituiertes Phenyl oder Benzyl, oder durch ein bis zwei gleiche oder verschiedene Substituenten der Gruppe bestehend aus Halogen, $C_1$-$C_4$-Alkyl, $C_1$-$C_4$-Alkoxy und $C_1$-$C_8$-Acylamino substituiertes Phenyl oder Benzyl bedeutet, und $R_2$ Wasserstoff oder Methyl ist, und Y einen Methinrest, der sich von einer aktiven Methylenverbindung ableitet, oder, falls $R_2$ Methyl ist, einen Iminrest bedeutet, der sich von einem heterocyclischen primären Amin ableitet.

Diese Komplexe eignen sich als hochwertige Pigmente zum pigmentieren von hochmolekularem Material. Sie zeichnen sich insbesondere durch hohe Licht- Migrations- und Wetterechtheit aus.


EP 0 074 925 A1

0074925



CIBA-GEIGY AG
Basel (Schweiz)

3-13549/+

## Nickelkomplexe von Azinen

In der GB-PS 1.467.595 sind Metallkomplexe von Azinen der Formel

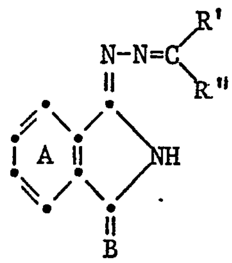

beschrieben, worin R' ein H-Atom, eine Alkyl- oder Arylgruppe, R" einen isocyclischen oder heterocyclischen Rest mit einer zur Azomethingruppe benachbarten Hydroxy- oder Mercaptogruppe, B den Rest einer methylenaktiven Verbindung, eines Aryl- oder Heteroarylamins bedeuten und der Ring A nicht wasserlöslichmachende Substituenten aufweisen kann. Diese Metallkomplexe ergeben jedoch in Kunststoffen und Lacken Färbungen von unbefriedigender Reinheit und ungenügenden Echtheiten.

Die Erfindung betrifft neue und wertvolle 1:1-Nickelkomplexe von Azinen der Formel I oder von dazu tautomeren Formen

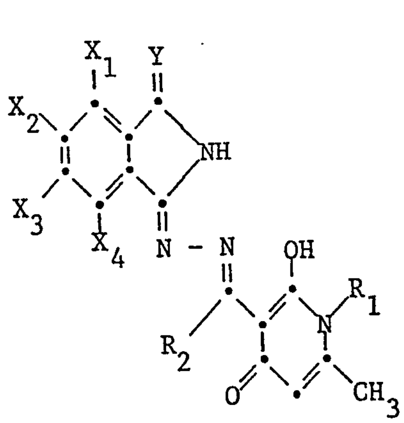

(I),

worin $X_1$ bis $X_4$ unabhängig voneinander Wasserstoff, Chlor oder Methoxy bedeuten, und $R_1$ Wasserstoff, $C_1$-$C_4$-Alkyl, unsubstituiertes Phenyl oder Benzyl, oder durch ein bis zwei gleiche oder verschiedene Substituenten der Gruppe bestehend aus Halogen, $C_1$-$C_4$-Alkyl, $C_1$-$C_4$-Alkoxy und $C_1$-$C_8$-Acylamino substituiertes Phenyl oder Benzyl bedeutet, und $R_2$ Wasserstoff oder Methyl ist, und Y einen Methinrest, der sich von einer aktiven Methylenverbindung ableitet, oder, falls $R_2$ Methyl ist, einen Iminrest bedeutet, der sich von einem heterocyclischen primären Amin ableitet.

In bevorzugten Verbindungen der Formel I bedeuten $X_1$ bis $X_4$ insbesondere entweder Wasserstoff oder Chlor, vor allem Wasserstoff, $C_1$-$C_4$-Alkyl in der Definition von $R_1$ kann beispielsweise Methyl, Aethyl, n-Propyl, Isopropyl, sec.-Butyl oder tert.-Butyl sein.

Beispiele für $C_1$-$C_4$-Alkoxy in der Definition von $R_1$ sind Methoxy, Aethoxy, n-Propyloxy oder sec.-Butyloxy.

Halogen in der Definition von $R_1$ kann zum Beispiel Fluor, Chlor oder Brom, vorzugsweise Chlor, bedeuten.

$C_1$-$C_8$-Acylamino in der Definition von $R_1$ kann beispielsweise Formyl-, Acetyl-, Propionyl-, Benzoylamino oder durch Chlor, Methyl oder Methoxy substituiertes Benzoylamino sein, wie 4-Methylbenzoylamino oder 2-Chlorbenzoylamino.

Beispiele für substituiertes Phenyl oder Benzyl sind 4-Chlorphenyl, 3,4-Dichlorphenyl, 4-Acetylaminophenyl, 2,5-Dimethoxyphenyl, 4-Methylbenzyl, Chlorbenzyl oder 2,4-Dichlorbenzyl.

In bevorzugten Verbindungen der Formel I bedeutet $R_1$ Wasserstoff, Methyl, Aethyl, Benzyl oder Phenyl, vor allem Wasserstoff oder Methyl.

Y als Methinrest, der sich von einer aktiven Methylenverbindung ableitet, bedeutet insbesondere

a) falls $R_2$ Wasserstoff ist, einen Rest der Formel II

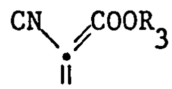 (II),

worin $R_3$ $C_1$-$C_4$-Alkyl bedeutet,

oder der Formel III 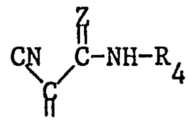 (III),

worin Z ein Sauerstoff- oder Schwefelatom bedeutet, und $R_4$ Wasserstoff, $C_1$-$C_{10}$-Alkyl, unsubstituiertes oder durch ein oder zwei gleiche oder verschiedene Substituenten der Gruppe bestehend aus Halogen, $C_1$-$C_4$-Alkyl und $C_1$-$C_4$-Alkoxy substituiertes Benzyl oder einen Rest der Formel IV bedeutet

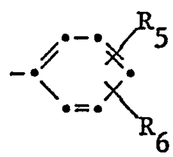 (IV),

worin $R_5$ und $R_6$ unabhängig voneinander Wasserstoff, Halogen, Nitro, Trifluormethyl, $C_1$-$C_4$-Alkyl, $R_7O$-, $R_7OCO$-, $R_7CONH$-, $R_8NHCO$- oder $R_8NHSO_2$- bedeuten, wobei $R_7$ und $R_8$ $C_1$-$C_4$-Alkyl oder unsubstituiertes oder mit Halogen, $C_1$-$C_4$-Alkyl oder $C_1$-$C_4$-Alkoxy substituiertes Phenyl bedeuten, und $R_8$ zusätzlich Wasserstoff ist,

b) falls $R_2$ Methyl ist, das gleiche, wie falls $R_2$ Wasserstoff ist, sowie einen Rest der Formel V

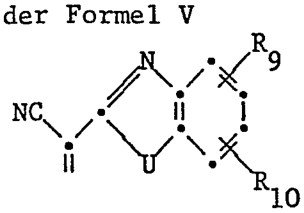 (V),

worin U ein Sauerstoff- oder Schwefelatom oder -NH- bedeutet, und $R_9$ und $R_{10}$ unabhängig voneinander Wasserstoff, Halogen, $C_1$-$C_4$-Alkyl, $C_1$-$C_4$-Alkoxy oder Nitro bedeuten,

oder einen Rest der Formel VI

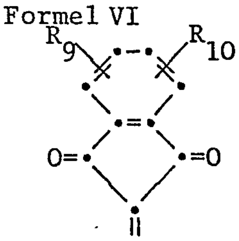 (VI),

worin $R_9$ und $R_{10}$ die oben angegebene Bedeutung haben, oder den Rest eines 5- oder 6-gliedrigen Heteroringes, der 1 bis 2 Stickstoffatome oder 1 bis 2 Stickstoffatome und 1 Sauerstoffatom oder nur 1 Sauerstoffatom enthält, und an den gegebenenfalls ein unsubstituierter oder mit einem oder zwei gleichen oder verschiedenen Substituenten der Gruppe bestehend aus Halogen, $C_1$-$C_4$-Alkyl und $C_1$-$C_4$-Alkoxy substituierter Benzolkern ankondensiert ist.

Y als Iminrest leitet sich von einem heterocyclischen primären Amin ab, insbesondere von einem solchen Amin, dessen Aminogruppe sich an einem 5- oder 6-gliedrigen Heteroring befindet, der 1 bis 2 Stickstoffatome oder 1 Stickstoffatom und 1 Sauerstoff- oder Schwefelatom enthält, und an den gegebenenfalls ein unsubstituierter oder mit einem oder zwei gleichen oder verschiedenen Substituenten der Gruppe bestehend aus Halogen, $C_1$-$C_4$-Alkyl und $C_1$-$C_4$-Alkoxy substituierter Benzolkern ankondensiert ist.

In den Definitionen von Y vorkommendes $C_1$-$C_4$-Alkyl, $C_1$-$C_4$-Alkoxy oder Halogen können die für $R_1$ beispielhaft angegebenen Bedeutungen annehmen. Bevorzugt sind aber für Alkyl Methyl, für Alkoxy Methoxy und für Halogen Chlor.

$C_1$-$C_{10}$-Alkyl als Bedeutung von $R_4$ kann geradkettig oder verzweigt sein und insbesondere Methyl, Aethyl, Isopropyl, sec.-Butyl, tert.-Butyl, tert.-Amyl, Hexyl, 1,1,3,3-Tetramethylbutyl, Octyl oder Decyl sein.

In bevorzugten Resten der Formel III bedeutet Alkyl als Definition für $R_4$ insbesondere eine Gruppe mit 1 bis 4 C-Atomen.

Im Rest der Formel III ist die bevorzugte Bedeutung von Z ein Sauerstoffatom.

Bedeutet im Rest der Formel III $R_4$ substituiertes Benzyl, so kann es

sich beispielsweise um 4-Methylbenzyl, 4-Chlorbenzyl, 4-Methoxybenzyl, 2-Methyl-4-chlorbenzyl oder 3,5-Dichlorbenzyl handeln. Unsubstituiertes Benzyl ist aber bevorzugt.

In der Gruppe der Formel IV können die Substituenten $R_5$ und $R_6$ bevorzugt Wasserstoff, Chlor, Methyl, Nitro, Trifluormethyl, Methoxy, Phenoxy, Carbamoyl, Sulfamoyl, Methylcarbamoyl, Acetylamino oder Benzoylamino sein.

Beispiele für Gruppen der Formel IV sind 2-Chlorphenyl, 2,3-Dichlorphenyl, 3,4-Dichlorphenyl, 3,5-Dichlorphenyl, 2,4-Dichlorphenyl, 2-Methylphenyl, 2-Methoxy-5-chlorphenyl, 2-Chlor-5-trifluormethylphenyl, 4-Chlor-3-carbamoylphenyl, 2-Chlor-5-phenylcarbamoylphenyl, 2-Chlor-5-p-chlorphenyl-carbamoylphenyl, 2-Methoxy-5-p-methyl-phenylcarbamoylphenyl und Phenyl.

Bedeuten $R_7$ und $R_8$ substituiertes Phenyl, so kann es sich beispielsweise um 4-Methylphenyl, 4-Chlorphenyl, 4-Aethylphenyl oder 4-Methoxyphenyl handeln. Unsubstituiertes Phenyl ist aber bevorzugt.

Im Rest der Formel V bedeutet U vorzugsweise ein Schwefelatom oder -NH-, insbesondere -NH-.

In bevorzugten Resten der Formeln V und VI bedeuten $R_9$ Wasserstoff, Chlor oder Methyl, und $R_{10}$ Wasserstoff, Chlor, Methyl oder Methoxy. Insbesondere bedeuten $R_9$ und $R_{10}$ aber beide Wasserstoff.

Bedeutet Y als Methinrest den Rest eines 5- oder 6-gliedrigen Heteroringes, so handelt es sich beispielsweise um den Rest eines 2,6-Dihydroxypyridins, 6-Hydroxy-pyridons-2, 4-Hydroxypyridons-2, Pyrazolons-5, Oxazolons-5, Imidazolindions, 4,6-Dihydroxypyrimidins, Tetrahydroxypyrimidindions-4,6, 4-Hydroxycumarins, 2,4-Dihydroxychinolins oder 4-Hydroxychinolons-2. Die genannten Verbindungen können auch beispielsweise mit Methyl, Methoxy oder Chlor substituiert sein. Verbindungen mit einem 6-gliedrigen Heteroring sind bevorzugt.

Y als Rest eines 6-gliedrigen Heteroringes bedeutet bevorzugt einen Rest der Formel VII

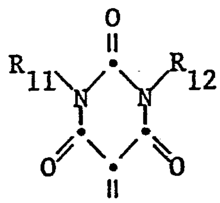

(VII),

worin $R_{11}$ Wasserstoff oder $C_1$-$C_4$-Alkyl, und $R_{12}$ Wasserstoff, $C_1$-$C_4$-Alkyl, unsubstituiertes oder mit Halogen, $C_1$-$C_4$-Alkyl oder $C_1$-$C_4$-Alkoxy substituiertes Phenyl bedeuten,

oder der Formel VIII

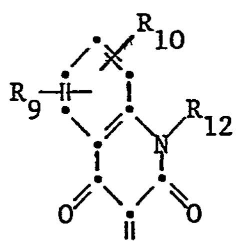

(VIII),

worin $R_9$, $R_{10}$ und $R_{12}$ die oben angegebene Bedeutung haben.

In bevorzugten Resten der Formeln VII und VIII bedeuten $R_{11}$ Wasserstoff oder Methyl, und $R_{12}$ Wasserstoff, Methyl oder Phenyl. Vor allem bedeuten $R_{11}$ und $R_{12}$ beide Wasserstoff.

Bedeutet Y einen Iminrest, so handelt es sich beispielsweise um den Rest von 2-Aminopyridin, 2-Amino-5-chlorpyridin, 2-Amino-4-hydroxychinolin, 2-Amino-4,5-dimethylthiazol oder 2-Aminobenzimidazol. Weitere Amine, von denen sich Y ableiten kann, sind in der GB-PS 1,467,595, S. 6-7, aufgeführt.

Y als Iminrest leitet sich bevorzugt von solchen Aminen ab, die einen 6-gliedrigen Heteroring mit einem Stickstoffatom oder einen 5-gliedrigen Heteroring mit einem oder zwei Stickstoffatomen und mit einem ankondensierten, unsubstituierten Benzolkern aufweisen.

In bevorzugten Verbindungen der Formel I steht Y für einen Methinrest, insbesondere für einen Rest der Formeln III, V oder eines 5- oder 6-gliedrigen Heteroringes, vor allem der Formel VII oder VIII.

In besonders bevorzugten Verbindungen der Formel I steht Y für einen Rest der Formel III, worin $R_4$ eine Gruppe der Formel IV ist.

Somit entsprechen bevorzugte Verbindungen der Formel I, worin $X_1$ bis $X_4$ entweder Wasserstoff oder Chlor, und $R_1$ Wasserstoff, Methyl, Benzyl oder Phenyl bedeuten, und Y

a) falls $R_2$ Wasserstoff ist, einen Rest der Formel III mit $R_4$ als Gruppe der Formel IV bedeutet, worin $R_5$ und $R_6$ unabhängig voneinander Wasserstoff, Chlor, Methyl, Nitro, Trifluormethyl, $R_7O-$, $R_7OCO-$, $R_7CONH-$, $R_8NHCO-$ oder $R_8NHSO_2-$ bedeuten, wobei $R_7$ und $R_8$ Methyl oder unsubstituiertes oder durch Chlor, Methyl oder Methoxy substituiertes Phenyl bedeuten, und $R_8$ zusätzlich Wasserstoff ist, oder

b) falls $R_2$ Methyl ist, die gleiche Bedeutung hat, wie wenn $R_2$ Wasserstoff ist, oder einen Rest der Formel V bedeutet, worin U -NH-, -S- oder -O-, und $R_9$ und $R_{10}$ unabhängig voneinander Wasserstoff, Chlor, Methyl oder Methoxy sind, oder einen Rest der Formel VII bedeutet, worin $R_{11}$ Wasserstoff oder Methyl und $R_{12}$ Wasserstoff, Methyl, unsubstituiertes oder durch Chlor, Methyl oder Methoxy substituiertes Phenyl bedeuten, oder für einen Rest der Formel VIII steht, worin $R_9$, $R_{10}$ und $R_{12}$ die oben angegebene Bedeutung haben.

Besonders bevorzugte Verbindungen entsprechen der Formel I, worin $X_1$ bis $X_4$ Wasserstoff, $R_1$ Wasserstoff oder Methyl, $R_2$ Methyl, und Y einen Rest der Formel III mit $R_4$ als Gruppe der Formel IV bedeuten, worin $R_5$ und $R_6$ unabhängig voneinander Wasserstoff, Chlor, Methyl, Nitro, Methoxy, Phenoxy, Carbamoyl, Sulfamoyl, Acetylamino oder Benzoylamino bedeuten.

Weitere bevorzugte Verbindungen entsprechen der Formel I, worin $X_1$

BAD ORIGINAL

bis $X_4$ und $R_1$ Wasserstoff, $R_2$ Methyl und Y einen Rest der Formel III mit $R_4$ als Gruppe der Formel IV bedeuten, worin $R_5$ Wasserstoff oder Chlor, und $R_6$ Wasserstoff, Chlor, Methyl, Methoxy oder Nitro bedeuten, oder worin $R_5$ und $R_6$ beide Wasserstoff bedeuten.

Die 1:1-Nickelkomplexe der Azine der Formel I erhält man nach an sich bekannten Verfahren, indem man

a) ein Hydrazonoisoindolin der Formel IX

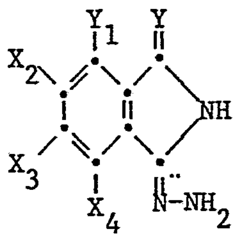

(IX),

worin $X_1$ bis $X_4$ und Y die oben angegebene Bedeutung haben, mit einem Aldehyd oder Keton der Formel X

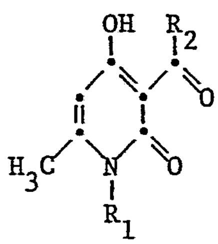

(X)

oder einem Aldimin der Formel XI

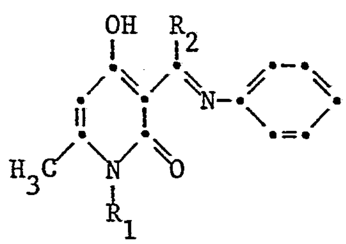

(XI),

worin $R_1$ und $R_2$ die oben angegebenen Bedeutungen haben, kondensiert und während oder nach der Kondensation ein nickelabgebendes Mittel zusetzt, oder

b) ein Hydrazon der Formel XII

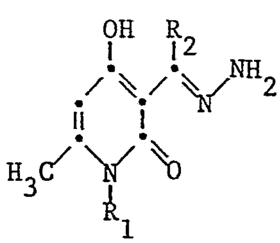

(XII),

worin $R_1$ und $R_2$ die oben angegebene Bedeutung haben, mit einem Isoindolinon der Formel XIII

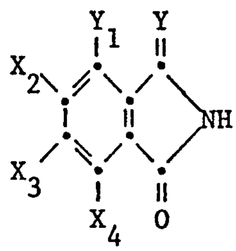

(XIII),

worin $X_1$ bis $X_4$ und Y die oben angegebene Bedeutung haben, in Gegenwart eines nickelabgebenden Mittels kondensiert.

Als nickelabgebende Mittel eignen sich insbesondere Nickel-Formiat, Nickel-Stearat, Nickel-Acetylacetonat, vor allem Nickel-Acetat.

Die Umsetzung erfolgt vorzugsweise bei Temperaturen zwischen 50 und 130°C in Wasser oder in einem organischen Lösungsmittel. Es können auch Mischungen von Lösungsmitteln verwendet werden.

Als organische Lösungsmittel eignen sich insbesondere Aethanol, Essigsäure, Dioxan, Dimethylformamid, N-Methylpyrrolidon, Butyrolacton oder Glykolmonoäthyläther.

Die Nickelkomplexe der Azine der Formel I lassen sich leicht durch Filtration isolieren. Allfällige Verunreinigungen können durch Auswaschen entfernt werden.

Die Verbindungen der Formeln X, XI und XII sind bekannt und lassen sich nach bekannten Verfahren herstellen.

Die Verbindungen der Formel IX können analog zum in der GB-PS 1,467,595 beschriebenen Verfahren hergestellt werden, indem man ein 1-Amino-3-iminoisoindolenin zuerst mit einer methylenaktiven Verbindung oder einem heterocyclischen Amin und anschliessend mit Hydrazin kondensiert.

Die Verbindungen der Formel XIII können nach bekannten Verfahren durch

Kondensation eines Iminoisoindolinons mit einer aktiven Methylenverbindung oder einem heterocyclischen Amin hergestellt werden.

Auf Seite 7 bis 8 der GB-PS 1,467,595 sind Beispiele von aktiven Methylenverbindungen aufgeführt, aus denen sich Y als Methinrest ableitet. Auf Seite 6 bis 7 der genannten GB-PS finden sich Beispiele von heterocyclischen Aminen, aus denen sich Y als Iminrest ableitet.

Die neuen Pigmente eignen sich zum Pigmentieren von hochmolekularen organischen Materialien, z.B. von Celluloseäthern und -estern, wie Aethylcellulose, Nitrocellulose, Celluloseacetat, Cellulosebutyrat, natürlichen Harzen oder Kunstharzen, wie Polymerisationsharzen oder Kondensationsharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, Polyamiden, Polyurethanen oder Polyestern, Gummi, Casein, Silikon und Silikonharzen, einzeln oder in Mischungen.

Dabei spielt es keine Rolle, ob die erwähnten hochmolekularen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die Pigmente können in der Form, wie sie in der Synthese anfallen, eingesetzt werden. In leicht gemahlener Form liefern sie opake Ausfärbungen. Man kann sie aber auch einer intensiveren Mahlung unterziehen und erhält dann transparente Ausfärbungen, wie beispielsweise farbstarke Metalleffektlackierungen.

Die Pigmente zeichnen sich in Lacken durch ein günstiges Fliessverhalten aus. Die Lackierungen weisen einen guten Glanz auf.

Werden die neuen Pigmente in Kunststoffe eingearbeitet, so stabilisieren sie diese gegen die Einflüsse von Licht und Wetter. Aus den gefärbten Kunststoffen hergestellte Gegenstände zeichnen sich durch eine längere Gebrauchsdauer aus.

Werden die neuen Pigmente in lichtstabilisiertes hochmolekulares organisches Material eingearbeitet, wird in der Regel dessen Lichtstabilität nicht beeinträchtigt. Gegebenenfalls lässt sich auch eine synergistische Verbesserung der Lichtstabilität beobachten.

Die erhaltenen Färbungen zeichnen sich durch gute allgemeine Pigmenteigenschaften, insbesondere durch ausgezeichnete Licht-, Hitze-, Wetter-, Ueberlackier- und Migrationsechtheit und durch für Metallkomplexe unerwartet hohe Brillanz des Farbtons, hohe Farbstärke und gute Dispergierbarkeit aus. Die Pigmente beeinflussen die mechanischen Eigenschaften der Substrate wenig, insbesondere fördern sie die Verzugseigenschaften von Kunststoffteilen nicht. Pigmentierte Fasern zeigen allgemein ein hohes Echtheitsniveau.

Die folgenden Beispiele erläutern die Erfindung. Es ist jeweils nur eine der möglichen Isomeren und tautomeren Formeln angegeben. Teile bedeuten Gewichtsteile.

Beispiel 1: 15,15 g 1-(Cyano-phenylcarbamoylmethylen)-3-hydrazonoisoindolin und 8,35 g 3-Acetyl-4-hydroxy-6-methyl-pyridon-2 werden in 200 ml Dimethylformamid 1 Stunde bei 100°C gerührt. Man gibt 13,75 g Nickelacetat·$4H_2O$ zu, erhöht die Temperatur auf 120°C und rührt die Suspension 3 Stunden bei dieser Temperatur. Das Produkt wird bei 70°C filtriert, mit Dimethylformamid und Aethanol gewaschen und bei 70°C im Vakuum getrocknet. Man erhält 19,4 g eines bordeaux-roten Pigmentes der Formel

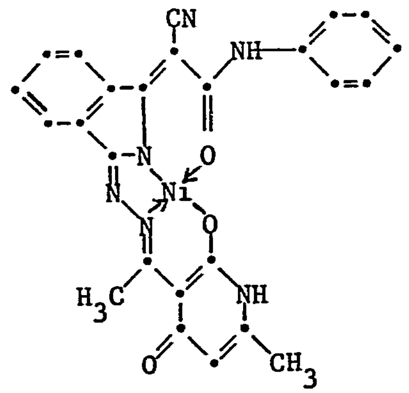

| Mikroanalyse | C | H | N | Ni |
|---|---|---|---|---|
| Berechnet % | 58,7 | 3,6 | 16,4 | 11,5 |
| Gefunden % | 58,4 | 3,9 | 16.3 | 11.2 |

Beispiel 2: 12,15 g 1-Phenyl-3-acetyl-4-hydroxy-6-methyl-pyridon-2 werden mit 17,4 g 1-(Cyano-p-nitrophenylcarbamoylmethylen)-3-hydrazonoisoindolin in 200 ml Dimethylformamid während einer Stunde bei 100°C gerührt. Dann gibt man 13,5 g Nickelacetat•4 $H_2O$ zu, erhöht die Temperatur auf 120°C und rührt drei Stunden bei dieser Temperatur. Man filtriert heiss, wäscht mit Dimethylformamid und Methanol und trocknet das Produkt im Vakuum bei 80°C. Man erhält 17,3 g eines roten Pigmentes der Formel

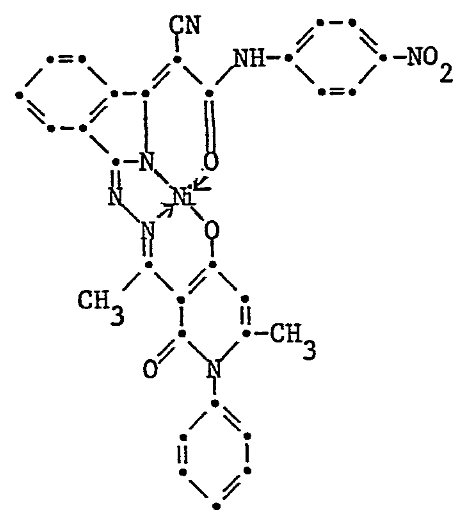

| Mikroanalyse | C | H | N | Ni |
| --- | --- | --- | --- | --- |
| Berechnet % | 59,0 | 3,4 | 15,6 | 9,3 |
| Gefunden % | 58,7 | 3,5 | 15,7 | 9,4 |

Beispiel 3: 11,4 g 2-Methyl-4-hydroxy-5-anilinomethylen-pyridon-6 und 16,9 g 1-(Cyano-o-chlorphenylcarbamoylmethylen)-3-hydrazonoisoindolin werden in 250 ml Dimethylformamid während 1 Stunde bei 100°C gerührt. Dann gibt man 13,5 g Nickelacetat•4 $H_2O$ zu und rührt die Suspension 3 Stunden bei 120°C. Man filtriert bei 70°C und wäscht mit Dimethylformamid und Aethanol. Nach dem Trocknen bei 60°C im Vakuum erhält man 14,7 g eines roten Pigmentes der Formel

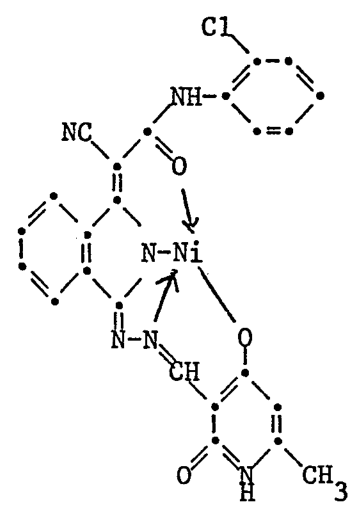

| Mikroanalyse | C | H | N | Cl | Ni |
| --- | --- | --- | --- | --- | --- |
| Berechnet % | 54,4 | 2,9 | 15,9 | 6,7 | 11,1 |
| Gefunden % | 53,8 | 3,0 | 16,2 | 6,4 | 11,3 |

Beispiel 4: 11,4 g 2-Methyl-4-hydroxy-5-anilinomethylen-pyridon-6 werden in 200 ml Dimethylformamid mit 13,75 g Nickelacetat•4 $H_2O$ auf 60°C erwärmt. Dann gibt man 16,9 g 1-(Cyano-m-chlor-phenylcarbamoylmethylen)-3-hydrazonoisoindolin zu, erwärmt auf 120°C und rührt die Suspension 3 Stunden bei dieser Temperatur. Man filtriert bei 70°C und wäscht mit Dimethylformamid und Aethanol. Man erhält nach dem

Trocknen im Vakuum bei 80°C 17,8 g eines rot-orangen Pigmentes der Formel

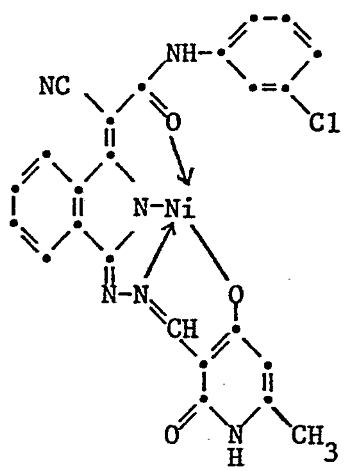

| Mikroanalyse | C | H | N | Cl | Ni |
|---|---|---|---|---|---|
| Berechnet % | 54,4 | 2,8 | 15,9 | 6,7 | 11,1 |
| Gefunden % | 53,8 | 2,8 | 16,1 | 6,5 | 11,1 |

Beispiele 5-16: Analog zu den Beispielen 1 bis 4 erhält man weitere 1:1-Nickelkomplexe von Azinen der Formel I, indem man ein Hydrazonoisoindolin der Formel IX, worin $X_1$ bis $X_4$ Wasserstoff und Y einen Rest der Formel III bedeuten, mit einem Aldehyd oder Keton der Formel X oder einem Aldimin der Formel XI umsetzt und Nickelacetat zufügt.

Aus der Tabelle I sind die Bedeutungen von $R_1$ und $R_2$ in den Formeln X und XI und von Z und $R_4$ in der Formel III ersichtlich. Ph bedeutet Phenyl, Bz bedeutet Benzyl.

Tabelle 1

| Beisp. Nr. | $R_1$ | $R_2$ | $R_4$ | Z | Farbton |
|---|---|---|---|---|---|
| 5 | H- | -H | -H | O= | rot |
| 6 | H- | $-CH_3$ | -H | O= | rot |
| 7 | H- | $-CH_3$ | -H | S= | rot |
| 8 | H- | -H | -H | S= | rot |
| 9 | H- | $-CH_3$ | $-CH_3$ | O= | rot |
| 10 | H- | -H | $-C_2H_5$ | O= | rot |
| 11 | H- | $-CH_3$ | $-C_2H_5$ | O= | orange |
| 12 | H- | -H | -Bz | O= | rot |
| 13 | H- | $-CH_3$ | -Bz | O= | rot |
| 14 | H- | $-CH_3$ | 4-Cl-Bz- | O= | rot |
| 15 | Ph- | $-CH_3$ | -Bz | O= | rot |
| 16 | Ph- | $-CH_3$ | -H | S= | rot |

Beispiele 17 bis 60: Analog zu den Beispielen 1 bis 4 erhält man weitere 1:1-Nickelkomplexe von Azinen der Formel I, indem man ein Hydrazonoisoindolin der Formel IX, worin $X_1$ bis $X_4$ Wasserstoff und Y einen Rest der Formel III mit Z als Sauerstoff und $R_4$ als Gruppe der Formel IV bedeuten, mit einem Aldehyd oder Keton der Formel X oder einem Aldimin der Formel XI umsetzt und Nickelacetat zufügt.

Aus der Tabelle 2 sind die Bedeutungen von $R_1$ und $R_2$ in den Formeln XI und XII und von $R_5$ und $R_6$ in der Gruppe der Formel IV ersichtlich. Ph bedeutet Phenyl.

Tabelle 2

| Beisp. Nr. | $R_1$ | $R_2$ | $R_5$ | $R_6$ | Farbton |
|---|---|---|---|---|---|
| 17 | H- | H- | H- | H- | rot |
| 18 | H- | H- | H- | 4-$H_3C$- | rot |
| 19 | H- | H- | H- | 4-Cl- | rot |
| 20 | H- | H- | H- | 4-$NO_2$- | rot |
| 21 | H- | H- | 3-$H_3C$- | 5-$H_3C$- | rot |
| 22 | H- | H- | 3-Cl- | 4-$H_3C$- | rot |
| 23 | H- | H- | 3-$H_3C$- | H- | rot |
| 24 | H- | H- | H- | 2-$H_3CO$- | rot |
| 25 | H- | H- | H- | 4-$H_3CCONH$- | bordeaux |
| 26 | H- | H- | H- | 4-PhCONH- | bordeaux |
| 27 | H- | H- | H- | 2-$H_3C$- | orange |
| 28 | H- | H- | H- | 4-$H_2NSO_2$- | rot |
| 29 | H- | H- | 2-Cl- | 5-Cl- | rot |
| 30 | H- | H- | 3-Cl- | 4-Cl- | rot |
| 31 | Ph- | H- | 4-Cl- | H- | rot |
| 32 | Ph- | H- | H- | 4-$NO_2$- | rot |
| 33 | Ph- | H- | H- | 3-$H_3C$- | rot |
| 34 | Ph- | -H | H- | 4-$H_2NSO_2$ | rot |
| 35 | Ph- | -H | 3-Cl- | 4-Cl- | rot |
| 36 | Ph- | -H | H- | 4-$H_3$ CCONH- | rot |
| 37 | Ph- | -H | 3-Cl- | 5-Cl- | rot |
| 38 | H- | $-CH_3$ | 3-$H_3C$- | 4-$H_3C$- | rot |
| 39 | H- | $-CH_3$ | H- | 3-$H_3CO$- | rot |
| 40 | H- | $-CH_3$ | H- | 4-PhCONH- | bordeaux |
| 41 | H- | $-CH_3$ | 2-Cl- | 4-Cl- | orange |
| 42 | H- | $-CH_3$ | 3-$H_3C$- | 5-$H_3C$- | rot |
| 43 | H- | $-CH_3$ | H- | 4-$H_2N$-$SO_2$- | rot |
| 44 | H- | $-CH_3$ | H- | 2-$H_3C$- | rot |
| 45 | H- | $-CH_3$ | H- | 2-Cl - | rot |

Tabelle 2 (Fortsetzung)

| Beisp. Nr. | $R_1$ | $R_2$ | $R_5$ | $R_6$ | Farbton |
|---|---|---|---|---|---|
| 46 | H- | $-CH_3$ | H- | $2-H_3CO-$ | rot |
| 47 | H- | $-CH_3$ | H- | $4-H_3C-$ | bordeaux |
| 48 | H- | $-CH_3$ | H- | $4-H_3CO-$ | rot |
| 49 | H- | $-CH_3$ | H- | 4-Cl- | bordeaux |
| 50 | H- | $-CH_3$ | H- | $3-H_3C-$ | rot |
| 51 | H- | $-CH_3$ | H- | 3-Cl- | rot |
| 52 | H- | $-CH_3$ | 3-Cl- | 4-Cl- | rot |
| 53 | H- | $-CH_3$ | 3-Cl- | $4-H_3C-$ | rot |
| 54 | H- | $-CH_3$ | H- | $4-NO_2-$ | bordeaux |
| 55 | H- | $-CH_3$ | H- | $4-H_3CCONH-$ | bordeaux |
| 56 | Ph- | $-CH_3$ | H- | $4-H_2NSO_2-$ | rot |
| 57 | Ph- | $-CH_3$ | 3-Cl- | 4-Cl- | rot |
| 58 | Ph- | $-CH_3$ | H- | $3-H_3C-$ | rot |
| 59 | Ph- | $-CH_3$ | 3-Cl- | 5-Cl- | rot |
| 60 | Ph- | $-CH_3$ | H- | $4-H_3CCONH-$ | rot |

Beispiel 61: 13,5 g des Kondensationsproduktes aus 1-Imino-3-oxoisoindolin und N-Methylbarbitursäure werden mit 13.75 g Nickelacetat$\cdot 4H_2O$ und 9.06 g des Hydrazons von 3-Acetyl-4-hydroxy-6-methyl-pyridon-2 in 400 ml N-Methylpyrrolidon 3h bei 150°C gerührt. Man filtriert bei 80°C und wäscht mit N-Methylpyrrolidon und Alkohol. Nach dem Trocknen erhält man 16 g eines roten Pigmentes der Formel

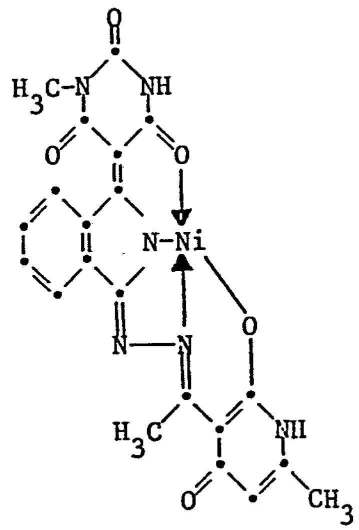

| Mikroanalyse | C | H | N | Ni |
|---|---|---|---|---|
| Berechnet % | 51.3 | 17.0 | 3.4 | 12.0 |
| Gefunden % | 51.1 | 16.7 | 3.5 | 12.3 |

Beispiel 62: Eine Suspension von 25.8 g des Hydrazons von 3-Acetyl-4-hydroxy-6-methyl-pyridon-2 und 27 g Nickelacetat•$4H_2O$ wird in 900 ml N-Methylpyrrolidon auf 60°C erwärmt. Dann gibt man 29.0 g 1-(2',4'-Dioxochinolin-3'-yliden)-3-isoindolinon zu und rührt 3 Stunden bei 150°C. Man kühlt auf 80°C ab, filtriert und wäscht mit N-Methylpyrrolidon und Aethanol. Nach dem Trocknen bei 70°C im Vakuum erhält man 41 g eines bordeauxroten Pigmentes der Formel

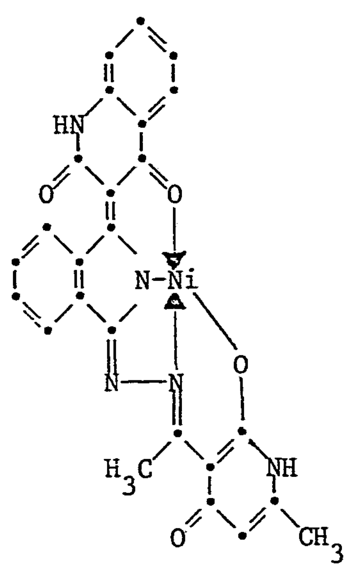

Mikroanalyse

| | C | H | N | Ni |
|---|---|---|---|---|
| Berechnet % | 63.5 | 3.6 | 11.9 | 10.0 |
| Gefunden % | 63.4 | 3.6 | 12.1 | 10.0 |

Beispiel 63 bis 71: Analog zu den Beispielen 61 und 62 erhält man weitere 1:1-Nickelkomplexe von Azinen der Formel I, indem man ein Hydrazon der Formel XII, worin $R_2$ Methyl bedeutet, und $R_1$ die in Tabelle 3 angegebenen Bedeutungen hat, mit einem Isoindolinon der Formel XIII, worin $X_1$ bis $X_4$ Wasserstoff bedeuten, und Y die in Tabelle 3 angegebene Bedeutung hat, in Gegenwart von Nickelacetat umsetzt.

Tabelle 3

| Beisp. Nr. | $R_1$ | Y | Farbton |
|---|---|---|---|
| 63 | H- | 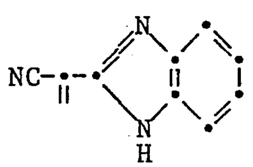 | rot |
| 64 | H- | 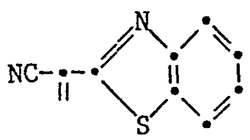 | rot |
| 65 | H- | 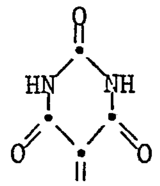 | rot |
| 66 | H- | 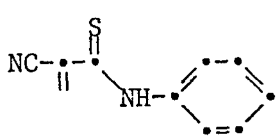 | rot |

Tabelle 3 (Fortsetzung)

| Beisp. Nr. | $R_1$ | Y | Farbton |
|---|---|---|---|
| 67 | H- | 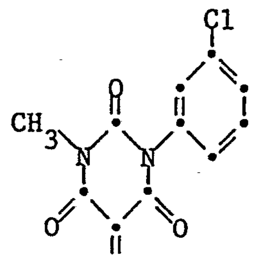 | rot |
| 68 | H- | 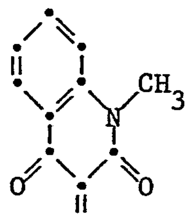 | rot |
| 69 | H- | 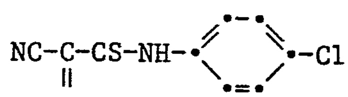 | rot |
| 70 | Phenyl | 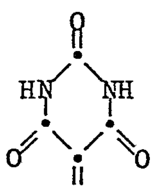 | rot |
| 71 | Phenyl | 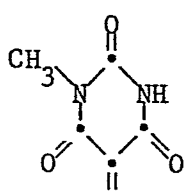 | rot |

Beispiele 72 bis 78: Analog zu den Beispielen 61 und 62 erhält man weitere 1:1-Nickelkomplexe von Azinen der Formel I, indem man ein Hydrazon der Formel XII, worin $R_2$ Methyl bedeutet, und $R_1$ die in Tabelle 4 angegebenen Bedeutungen hat, mit einem Isoindolinon der Formel XIII, worin $X_1$ bis $X_4$ Chlor bedeuten, und Y die in Tabelle 4 angegebene Bedeutung hat, in Gegenwart von Nickelacetat umsetzt.

Tabelle 4

| Beisp. Nr. | $R_1$ | Y | Farbton |
|---|---|---|---|
| 72 | H- | 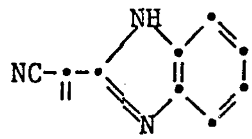 | bordeaux |
| 73 | H- | 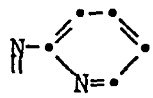 | rot |
| 74 | H- | 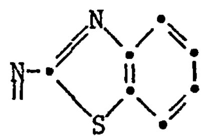 | rot |
| 75 | Phenyl | 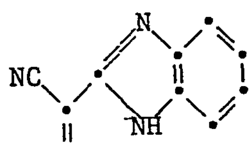 | rot |
| 76 | Phenyl | 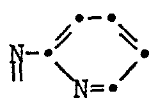 | rot |
| 77 | Phenyl | 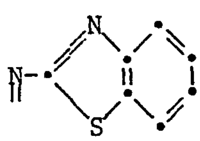 | rot |
| 78 | Phenyl | 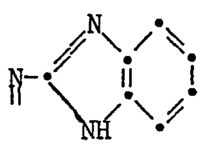 | rot |

Beispiel 79: In einem Laboratoriums-Kneter von 250 Vol.-Teilen Inhalt legt man 25 Teile des gemäss Beispiel 1 hergestellten Pigments, 100 Teile feingemahlenes Natriumchlorid und 30 Teile Diacetonalkohol vor. Man knetet die Mischung während 5 Stunden unter Kühlung und trägt sie dann in 4000 Vol.-Teile Wasser ein. Natriumchlorid sowie Diacetonalkohol gehen in Lösung, das Pigment fällt aus. Man filtriert die Suspension, wäscht das Nutschgut gründlich mit Wasser und trocknet

BAD ORIGINAL

es im Vakuumtrockenschrank bei 80°.

Beispiel 80: 65 Teile stabilisiertes Polyvinylchlorid, 35 Teile Dioctylphthalat und 0,2 Teile des gemäss Beispiel 79 erhaltenen Pigmentes werden miteinander verrührt und dann auf einem Zweiwalzenkalander während 7 Minuten bei 160°C hin- und hergewalzt. Man erhält eine bordeaux-rot gefärbte Folie von sehr guter Licht- und Migrationsechtheit.

Beispiel 81: 10 g Titandioxid und 2 g des nach Beispiel 32 hergestellten Pigments werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120°C eingebrannt, dann erhält man eine Orangelackierung, die sich bei guter Farbstärke durch eine sehr gute Ueberlackier-, Licht- und Wetterechtheit auszeichnet.

Beispiel 82: 4 Teile des fein verteilten Pigments gemäss Beispiel 79 werden in 20 Teilen Lösungsmittel der folgenden Zusammensetzung eingerührt: 50 Teile Solvesso 150® (Gemisch aromatischer Kohlenwasserstoffe), 15 Teile Butylacetat, 5 Teile Exkin II® (Verlaufmittel auf Ketoximbasis), 25 Teile Methyl-isobutylketon, 5 Teile Silikonöl (1 % in Solvesso 150®).

Nachdem die vollständige Feinverteilung erreicht ist (je nach Art des Rührens in ca. 15-60 Minuten), werden die Bindemittel zugesetzt, nämlich 48,3 Teile Baycryl L 530® (Acrylharz) (51 % in Xylol/Butanol 3:1) und 23,7 Teile Maprenal TTX® (Melaminharz) (55 % in Butanol).

Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°C. Die erhaltenen bordeaux-roten Lackierungen zeichnen sich aus durch sehr guten Verlauf, hohen Glanz und ausgezeichnete Feinverteilung des Pigmentes, sowie durch ausgezeichnete Wetterechtheiten.

Normalvalenzen der Pigmente aus den Beispielen 1 bis 78

a) 1 g Pigment, 1 g eines Glycerinharzesters von polymerisiertem Kolophonium Dertopoline®, 20 g Kochsalz und 10 ml Diäthylenglykoldimethyläther werden mit einem Scheibenrührer 2 Std. intensiv gerührt. Danach wird die Mischung in Wasser ausgetragen, bis zur gleichmässigen Verteilung gerührt, der Festkörper abfiltriert, gründlich mit Wasser gewaschen und bei 60 °C im Vakuum getrocknet. Das so hergestellte Präparat enthält 50 % Pigment.

b) Aus 65 Teilen stabilisiertem Polyvinylchlorid, 35 Teilen Dioctylphthalat und 0,4 Teilen Pigmentpräparat 50-%ig wird auf dem heissen Zweiwalzenkalander eine Folie hergestellt.

c) An der gefärbten Folie wird die Remission inklusive Glanz über weisser Unterlage für die Normlichtart D 65 und den 10°-Beobachter gemessen. Entsprechend dem CIE-System erfolgt die Berechnung der Normalvalenzen (Tristimulus values) X,Y,Z. (Tabelle 5)

(Literatur: Kirk-Othmer, Encycl. of Chem. Technology, 3. Ed., Vol. 6, S.535 (I. Wiley 1979).)

Tabelle 5:

| Beisp. Nr. | X | Y | Z |
|---|---|---|---|
| 1 | 23,36 | 14,79 | 5,89 |
| 2 | 31,67 | 19,76 | 6,28 |
| 3 | 31,20 | 19,89 | 5,42 |
| 4 | 33,56 | 22,40 | 5,89 |
| 7 | 20,79 | 13,92 | 5,40 |
| 9 | 37,67 | 24,70 | 5,81 |
| 12 | 39,78 | 28,40 | 9,25 |
| 13 | 36,09 | 23,54 | 8,34 |
| 15 | 44,14 | 30,66 | 5,63 |
| 16 | 23,73 | 15,57 | 7,66 |
| 17 | 30,06 | 19,53 | 5,70 |
| 18 | 28,27 | 18,77 | 6,58 |
| 19 | 26,49 | 17.67 | 6,07 |
| 20 | 23,90 | 15,51 | 5,94 |
| 21 | 28,40 | 18,49 | 6,69 |
| 22 | 23,99 | 16,85 | 6,98 |
| 23 | 28,85 | 19,05 | 6,20 |
| 24 | 25,18 | 15,54 | 5,72 |
| 25 | 18,58 | 12,28 | 6,38 |
| 26 | 23,11 | 14,51 | 6,05 |
| 27 | 37,18 | 25,69 | 6,74 |
| 28 | 24,07 | 15,11 | 5,84 |
| 29 | 29,86 | 18,36 | 6,86 |
| 38 | 28,30 | 18,40 | 6,76 |
| 39 | 28,53 | 18,43 | 6,21 |
| 40 | 19,58 | 12,42 | 6,46 |
| 41 | 41,15 | 27,65 | 5,40 |
| 42 | 29,57 | 18,66 | 5,69 |
| 43 | 31,87 | 20,75 | 6,03 |
| 44 | 34,03 | 21,52 | 5,40 |
| 45 | 33,29 | 20,93 | 5,18 |
| 46 | 34,27 | 21,80 | 6,25 |
| 47 | 21,14 | 13,88 | 6,46 |
| 48 | 27,41 | 17,48 | 6,88 |
| 49 | 22,41 | 14,64 | 6,14 |
| 50 | 29,44 | 19,16 | 6,60 |
| 51 | 26,60 | 17,85 | 5,89 |
| 52 | 24,67 | 16,07 | 5,98 |
| 53 | 23,16 | 15,21 | 5,55 |
| 54 | 14,62 | 9,98 | 5,86 |
| 55 | 12,42 | 9,74 | 7,94 |
| 56 | 36,81 | 23,58 | 5,45 |
| 57 | 34,03 | 21,24 | 5,74 |
| 58 | 34,99 | 22,72 | 7,15 |
| 59 | 25,14 | 16,51 | 5,79 |
| 60 | 36,49 | 22,69 | 5,73 |
| 61 | 32,10 | 19,86 | 5,22 |

Tabelle 5: (Fortsetzung)

| Beisp. Nr. | X | Y | Z |
|---|---|---|---|
| 63 | 24,40 | 14,67 | 5,10 |
| 64 | 11,92 | 9,20 | 5,65 |
| 65 | 25,42 | 15,96 | 5,95 |
| 66 | 17,79 | 11,66 | 5,82 |
| 67 | 34,19 | 21,01 | 4,87 |
| 68 | 11,94 | 8,23 | 4,98 |
| 69 | 16,27 | 10,46 | 5,17 |
| 70 | 27,04 | 16,80 | 4,87 |
| 71 | 28,26 | 17,66 | 5,93 |
| 72 | 25,66 | 15,55 | 5,78 |
| 73 | 34,45 | 21,48 | 5,11 |
| 74 | 27,17 | 18,19 | 5,59 |
| 76 | 34,24 | 21,14 | 5,51 |
| 77 | 35,94 | 24,40 | 7,59 |
| 78 | 38,76 | 26,91 | 5,80 |

Patentansprüche

1. 1:1-Nickelkomplexe von Azinen der Formel I oder von dazu tautomeren Formen

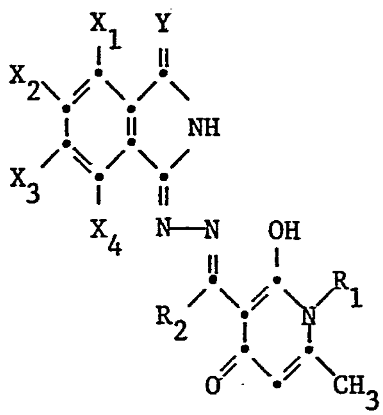

(I)

worin $X_1$ bis $X_4$ unabhängig voneinander Wasserstoff, Chlor oder Methoxy bedeuten, und $R_1$ Wasserstoff, $C_1$-$C_4$-Alkyl, unsubstituiertes Phenyl oder Benzyl, oder durch ein bis zwei gleiche oder verschiedene Substituenten der Gruppe bestehend aus Halogen, $C_1$-$C_4$-Alkyl, $C_1$-$C_4$-Alkoxy und $C_1$-$C_8$-Acylamino substituiertes Phenyl oder Benzyl bedeutet, und $R_2$ Wasserstoff oder Methyl ist, und Y einen Methinrest, der sich von einer aktiven Methylenverbindung ableitet, oder, falls $R_2$ Methyl ist, einen Iminrest bedeutet, der sich von einem heterocyclischen primären Amin ableitet.

2. 1:1-Nickelkomplexe von Azinen gemäss Anspruch 1 der Formel I, worin Y als Methinrest folgendes bedeutet:

a) falls $R_2$ Wasserstoff ist, einen Rest der Formel II

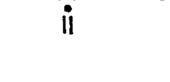

(II),

worin $R_3$ $C_1$-$C_4$-Alkyl bedeutet,

oder der Formel III

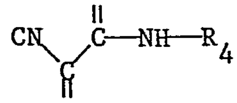

(III),

worin Z ein Sauerstoff- oder Schwefelatom bedeutet, und $R_4$ Wasserstoff, $C_1$-$C_{10}$-Alkyl, unsubstituiertes oder durch ein oder zwei gleiche oder verschiedene Substituenten der Gruppe bestehend aus Halogen, $C_1$-$C_4$-Alkyl und $C_1$-$C_4$-Alkoxy substituiertes Benzyl oder einen Rest der Formel IV bedeutet

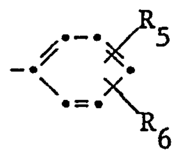 (IV),

worin $R_5$ und $R_6$ unabhängig voneinander Wasserstoff, Halogen, Nitro, Trifluormethyl, $C_1$-$C_4$-Alkyl, $R_7O$-, $R_7OCO$-, $R_7CONH$-, $R_8NHCO$- oder $R_8NHSO_2$- bedeuten, wobei $R_7$ und $R_8$ $C_1$-$C_4$-Alkyl oder unsubstituiertes oder mit Halogen, $C_1$-$C_4$-Alkyl oder $C_1$-$C_4$-Alkoxy substituiertes Phenyl bedeuten, und $R_8$ zusätzlich Wasserstoff ist,

b) falls $R_2$ Methyl ist, das gleiche, wie falls $R_2$ Wasserstoff ist, sowie einen Rest der Formel V

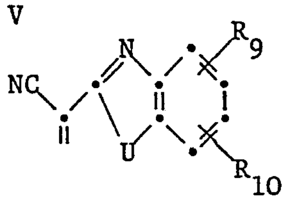 (V),

worin U ein Sauerstoff- oder Schwefelatom oder -NH- bedeutet, und $R_9$ und $R_{10}$ unabhängig voneinander Wasserstoff, Halogen, $C_1$-$C_4$-Alkyl, $C_1$-$C_4$-Alkoxy oder Nitro bedeuten,

oder einen Rest der Formel VI

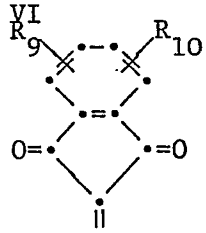 (VI),

worin $R_9$ und $R_{10}$ die oben angegebene Bedeutung haben, oder den Rest eines 5- oder 6-gliedrigen Heteroringes, der 1 bis 2 Stickstoffatome oder 1 bis 2 Stickstoffatome und 1 Sauerstoffatom oder nur 1 Sauerstoffatom enthält, und an den gegebenenfalls ein unsubstituierter oder mit einem oder zwei gleichen oder verschiedenen Substituenten der Gruppe bestehend aus Halogen, $C_1$-$C_4$-Alkyl und $C_1$-$C_4$-Alkoxy substituierter Benzolkern ankondensiert ist,

BAD ORIGINAL

und worin Y als Iminrest sich von einem Amin ableitet, dessen Aminogruppe sich an einem 5- oder 6-gliedrigen Heteroring befindet, der 1 bis 2 Stickstoffatome oder 1 Stickstoffatom und 1 Sauerstoff- oder Schwefelatom enthält, und an den gegebenenfalls ein unsubstituierter oder mit einem oder zwei gleichen oder verschiedenen Substituenten der Gruppe bestehend aus Halogen, $C_1$-$C_4$-Alkyl und $C_1$-$C_4$-Alkoxy substi- Benzolkern ankondensiert ist.

3. 1:1-Nickelkomplexe von Azinen gemäss Anspruch 1 der Formel I, worin Y für einen Methinrest steht.

4. 1:1-Nickelkomplexe von Azinen gemäss Anspruch 1 und 2 der Formel I, worin Y einen Rest der Formel III oder V oder eines 5- oder 6-gliedrigen Heteroringes bedeutet.

5. 1:1-Nickelkomplexe von Azinen gemäss Anspruch 1 und 2 der Formel I, worin Y einen Rest der Formel III oder V oder eines 6-gliedrigen Heteroringes der Formel VII oder VIII bedeutet

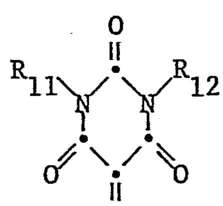

(VII)

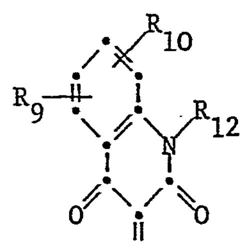

(VIII)

,

worin $R_{11}$ Wasserstoff oder $C_1$-$C_4$-Alkyl, und $R_{12}$ Wasserstoff, $C_1$-$C_4$-Alkyl, unsubstituiertes oder mit Halogen, $C_1$-$C_4$-Alkyl oder $C_1$-$C_4$-Alkoxy substituiertes Phenyl bedeuten, und $R_9$ und $R_{10}$ die in Patentanspruch 2 angegebene Bedeutung haben.

6. 1:1-Nickelkomplexe von Azinen gemäss Anspruch 1 und 5 der Formel I, worin $X_1$ bis $X_4$ entweder Wasserstoff oder Chlor, und $R_1$ Wasserstoff, Methyl, Benzyl oder Phenyl bedeuten, und Y

a) falls $R_2$ Wasserstoff ist, einen Rest der Formel III mit $R_4$ als Gruppe der Formel IV bedeutet, worin $R_5$ und $R_6$ unabhängig voneinander Wasserstoff, Chlor, Methyl, Nitro, Trifluormethyl, $R_7O-$, $R_7OCO-$, $R_7CONH-$, $R_8NHCO-$ oder $R_8NHSO_2-$ bedeuten, wobei $R_7$ und $R_8$ Methyl oder unsubstituiertes oder durch Chlor, Methyl oder Methoxy substituiertes Phenyl bedeuten, und $R_8$ zusätzlich Wasserstoff ist, oder

b) falls $R_2$ Methyl ist, die gleiche Bedeutung hat, wie wenn $R_2$ Wasserstoff ist, oder einen Rest der Formel V bedeutet, worin U -NH-, -S- oder -O-, und $R_9$ und $R_{10}$ unabhängig voneinander Wasserstoff, Chlor, Methyl oder Methoxy sind, oder einen Rest der Formel VII bedeutet, worin $R_{11}$ Wasserstoff oder Methyl und $R_{12}$ Wasserstoff, Methyl, unsubstituiertes oder durch Chlor, Methyl oder Methoxy substituiertes Phenyl bedeuten, oder für einen Rest der Formel VIII steht, worin $R_9$, $R_{10}$ und $R_{12}$ die oben angegebene Bedeutung haben.

7. 1:1-Nickelkomplexe von Azinen gemäss Anspruch 1 und 2 der Formel I, worin $X_1$ bis $X_4$ Wasserstoff, $R_1$ Wasserstoff oder Methyl, $R_2$ Methyl, und Y einen Rest der Formel III mit $R_4$ als Gruppe der Formel IV bedeuten, worin $R_5$ und $R_6$ unahängig voneinander Wasserstoff, Chlor, Methyl, Nitro, Methoxy, Phenoxy, Carbamoyl, Sulfamoyl, Acetylamino oder Benzoylamino bedeuten.

8. 1:1-Nickelkomplexe von Azinen gemäss Anspruch 1 und 2 der Formel I, worin $X_1$ bis $X_4$ und $R_1$ Wasserstoff, $R_2$ Methyl, und Y einen Rest der Formel III mit $R_4$ als Gruppe der Formel IV bedeuten, worin $R_5$ Wasserstoff oder Chlor, und $R_6$ Wasserstoff, Chlor, Methyl, Methoxy oder Nitro bedeuten.

9. 1:1-Nickelkomplexe von Azinen gemäss Anspruch 1 und 2 der Formel I, worin $X_1$ bis $X_4$ und $R_1$ Wasserstoff, $R_2$ Methyl, und Y einen Rest der Formel III mit $R_4$ als Gruppe der Formel N bedeuten, worin $R_5$ und $R_6$ Wasserstoff sind.

10. Verfahren zur Herstellung von 1:1-Nickelkomplexen von Azinen der Formel I gemäss Anspruch 1, dadurch gekennzeichnet, dass man

a) ein Hydrazonoisoindolin der Formel IX

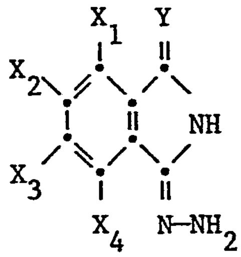

(IX),

worin $X_1$ bis $X_4$ und Y die in Patentanspruch 1 angegebene Bedeutung haben, mit einem Aldehyd oder Keton der Formel X

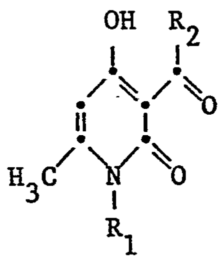

(X)

oder einem Aldimin der Formel XI

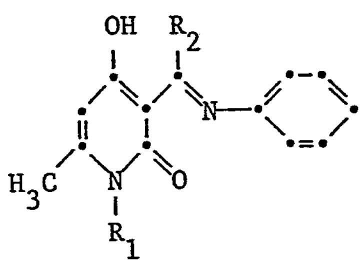

(XI),

worin $R_1$ und $R_2$ die in Patentanspruch 1 angegebene Bedeutung haben, kondensiert und während oder nach der Kondensation ein nickelabgebendes Mittel zusetzt, oder

b) ein Hydrazon der Formel XII

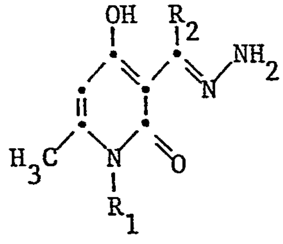

(XII),

worin $R_1$ und $R_2$ die in Patentanspruch 1 angegebene Bedeutung haben, mit einem Isoindolinon der Formel XIII

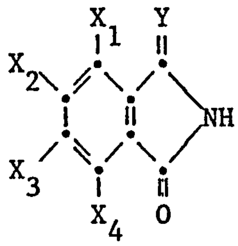

(XIII),

worin $X_1$ bis $X_4$ und Y die in Patentanspruch 1 angegebene Bedeutung haben, in Gegenwart eines nickelabgebenden Mittels kondensiert.

11. Verwendung von 1:1-Nickelkomplexen von Azinen der Formel I gemäss Anspruch 1 zum Pigmentieren von hochmolekularem organischem Material.

12. Hochmolekulares organisches Material enthaltend einen 1:1-Nickelkomplex eines Azins der Formel I gemäss Anspruch 1.

Europäisches Patentamt

**0074925**
Nummer der Anmeldung

# EUROPÄISCHER RECHERCHENBERICHT

EP 82 81 0372

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 022 770 (LEPLATTENIER et al.) * Spalte 1, Formel 3; Spalte 9, Zeilen 46-53; Beispiel 71 * | 1-12 | C 09 B 57/04<br>C 07 D 401/12<br>C 07 D 401/14<br>C 08 K 5/34 |
| P,A | EP-A-0 036 834 (CIBA-GEIGY) | | |
| A | DE-A-2 739 856 (CIBA-GEIGY) | | |
| | ----- | | |
| | | | RECHERCHIERTE SACHGEBIETE (Int. Cl. 3) |
| | | | C 09 B<br>C 07 D |

Der vorliegende Recherchenbericht wurde für alle Patentansprüche erstellt.

| Recherchenort | Abschlußdatum der Recherche | Prüfer |
|---|---|---|
| DEN HAAG | 15-12-1982 | DAUKSCH H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument